# EUROPÄISCHE PATENTSCHRIFT

(11) **EP 2 721 922 B1**
(45) Veröffentlichungstag und Bekanntmachung des Hinweises auf die Patenterteilung: **11.01.2017**
(21) Anmeldenummer: 13004989.3
(22) Anmeldetag: 18.10.2013
(51) Int. Cl.: A01F 25/20

(54) **Schneidwerk an einer am Schwenkarm eines Futtermischwagens angeordneten Entnahmevorrichtung**
Cutting device on a removal devices fitted to the swing arm of a feed mixing car
Système de coupe sur un dispositif de prélèvement disposé au niveau du bras mobile d'un chariot de mélange de fourrage

(30) Priorität: 19.10.2012 DE 102012109980
(43) Veröffentlichungstag der Anmeldung: 23.04.2014
(73) Patentinhaber: B. Strautmann & Söhne GmbH u. Co. KG, 49196 Bad Laer (DE)
(72) Erfinder: Heggemann, Norbert, 49196 Bad Laer (DE); Lasar, Bernd, 49324 Melle (DE)
(74) Vertreter: Träger, Denis

(56) Entgegenhaltungen:
- EP-A1- 0 331 950
- EP-A1- 0 543 688
- EP-A1- 2 567 609
- DE-A1- 4 006 236
- DE-A1- 19 610 590

## Beschreibung

Die Erfindung betrifft ein Schneidwerk an einer am Schwenkarm eines Futtermischwagens angeordneten Entnahmevorrichtung nach dem Oberbegriff des Anspruchs 1.

Schneidewerke dieser Art, die an Entnahmevorrichtungen von Futtermischwagen Verwendung finden, werden in landwirtschaftlichen Betrieben zum Entnehmen von Viehfutter aus Flachsilos eingesetzt. Zur Futterentnahme wird hierbei die hochgeschwenkte Entnahmevorrichtung an der Stirnseite des Flachsilos derart an der Oberkante angesetzt, dass beim Absenken ein Futterstreifen abgetragen wird. Hierbei trennt das Schneidwerk die zu entnehmende Silage sauber vom Silostock ab, die parallel zum Schneidmesser angeordnete Förderwalze übernimmt es und fördert es direkt oder über Fördereinrichtungen zum Mischbehälter des Futtermischwagens.

Bei der Silageentnahme wird angestrebt, zur Erhaltung der Futterqualität die Futterstruktur weitgehend zu erhalten. Bekannte Ausführungen von Entnahmegeräten zur Futteraufnahme sind mit hochtourigen Fräswalzen ausgestattet, bei denen die Gefahr besteht, dass diese mit ihren Fräszinken beim Futterabtragen durch Zerreißen und Zerquetschen die Futterstruktur beschädigen und eine raue Oberfläche an der Stirnwand des Flachsilos hinterlassen, so dass das Eindringen von Feuchtigkeit und Luftsauerstoff in den Silostock begünstigt wird, was durch erhöhte Neigung zu Nachgärungen zu erheblicher Minderung der Futterqualität führen kann. Weiterhin erfordert die Fräsarbeit einen hohen Leistungsbedarf der Fräswalze.

Um die Nachteile der rauen Oberfläche an den Schnittflächen weitgehend zu vermeiden und um die Futterstruktur möglichst zu erhalten und gleichzeitig die Antriebsleistung zu senken, sind Ausführungen von Entnahmevorrichtungen vorgesehen, welche die von einer Fräswalze ausgeübte kombinierte Trenn- und Förderfunktion in eine jeweils separate Trenn- und Förderfunktion aufteilen, wobei die Silage mittels Schneidmesser vom Silostock abgetrennt wird, und von einer Förderwalze zur Weiterleitung in einen Mischraum übernommen wird. Durch die exakte Trennarbeit von Schneidemessern werden glatte und saubere Schnittflächen erzeugt. Die Förderwalze, entlastet von der Reiß- und Quetscharbeit, transportiert das abgetrennte Futter mit weniger Leistungsbedarf und behandelt es schonender.

Aus EP 2567609 A1 ist ein Gerät zur Futterentnahme aus Flachsilos bekannt, welches schwenkbar an einem Futtermischwagen angebracht ist und am äußeren Ende seines mit einem Förderband ausgestatteten Schwenkarms eine Trennvorrichtung trägt. Die Trennvorrichtung umfasst ein Schneidwerk mit einem Schneidbalken 7 und wenigstens einem seitlichen Schneidmesser 60 mit einer konkaven, konvexen oder geradlinigen Schneide 61.

Eine stirnseitige mit einem Schneidbalken versehene Entnahmevorrichtung ist aus der DE 4210479 A1 bekannt. Diese Ausführung trennt an den Seiten die Silage nicht ab, sondern erzeugt an den Seiten des Flachsilos zerfasernde, aufgeraute, unsaubere Schnittflächen, die das Eindringen von Luft und Feuchtigkeit begünstigen. Rieselverluste werden verstärkt.

Eine Ausführung eines Entnahmegeräts mit stirnseitig und seitlich angeordneten oszillierenden Schneidmessern sowie einer am Schneidwerk angeordneten Förderwalze ist nach der EP1712123 B1 bekannt. Hierbei sind die seitlichen Schneidmesser, bei denen es sich um miteinander in Wechselwirkung stehende und jeweils mit Schneidzähnen ausgestattete Doppelmesser handelt, sehr aufwendig. Sie benötigen jeweils separate Antriebselemente und sind dadurch sehr teuer.

Bei der Entnahme gerät das zu schneidende Futter zwischen die Zähne der Doppelmesser und wird durch die gegenläufig ausgerichtete Hubbewegung der beiden Messerklingen geschnitten. Die Schneiden der seitlichen Doppelmesser sind linear ausgerichtet. Der Widerstand, mit dem das zu schneidende Gut dem sich absenkenden Schneidwerk entgegenwirkt ist somit über die gesamte Länge der Seitenmesser gleich groß. Weiterhin ist die Förderwalze so am Schneidwerk angebracht, dass eine unmittelbare Wechselwirkung zwischen den Doppelmessern und der Förderwalze bzw. etwaig darauf angebrachten Werkzeugen, nicht möglich ist.

Es stellt sich daher die Aufgabe, ein Schneidwerk an einer am Schwenkarm eines Futtermischwagens angeordneten Entnahmevorrichtung vorzuschlagen, welches die genannten Nachteile, wie unsaubere seitliche Schnittflächen, Ausfransungen in den Ecken der Schnittkanten, aufwendig angetriebene, teure Seitenmesser vermeidet und den Leistungsbedarf der Schneidarbeit verringert.

Diese Aufgabe wird bei einem Schneidwerk nach dem Oberbegriff des Anspruches 1 dadurch gelöst, dass am Seiten-Schneidmesser eine Schneide vorgesehen ist, welche vom Schneidenanfangspunkt der Schneide in Richtung einer Kante gerichtet ist und in etwa bis an die Kante heranreicht.

Das Seiten-Schneidmesser des erfindungsgemäßen Schneidwerks umfasst somit eine Schneide mit zwei aneinander angrenzenden Schneidbereichen.

Das Schneidwerk der Entnahmevorrichtung ist wenigstens an einer Seite mit einem fest angeordneten, einfachen und preiswerten Schneidmesser besetzt, so dass die Schneidvorrichtung zur Durchführung L-förmiger Entnahmeschnitte geeignet ist. Bei mit einseitigem seitlichem Schneidmesser ausgestatteten Schneidvorrichtungen erfolgt die Entnahme des Futters aus dem Flachsilo ausgehend von der Seite des Flachsilos, die einen Rand darstellt und folglich nicht geschnitten werden muss. Im Folgenden werden dann weitere, seitlich versetzte L-förmige Entnahmeschnitte bis zum Erreichen der anderen Seite des Flachsilos durchgeführt.

Das Seitenmesser weist eine Schneide mit einer konkaven, insbesondere kreisbogenförmigen Kontur auf, bei der der Kreisbogen Teil eines tortenstückartigen Kreissektors ist, wobei der Innenwinkel des Kreissektors wenigstens 45° beträgt. Vorzugsweise ist der Innenwinkel kleiner als 90°. Hieraus resultiert im vorderen Bereich, das heißt im Bereich der Ecken der U-förmigen Schneidvorrichtung, an den Seitenmessern ein spitzer Schneiden- bzw. Schnittwinkel, der das Einstechen und Eindringen der Seitenmesser, und damit als Resultat auch der gesamten Schneidvorrichtung, erleichtert.

Überraschenderweise hat sich gezeigt, dass die aus der erfindungsgemäßen Geometrie des Seitenmessers resultierende Länge der konkaven Schneide einerseits ausreichend lang ist, um bei der Entnahme ungeschnittene Futterpartikel, die insbesondere von der Förderwalze bzw. -trommel durch deren Rotation erfasst und mitgenommen werden, zu schneiden. Andererseits ist eine Schneide, deren Kreisbogen-Länge durch einen Kreissektor mit einem Innenwinkel von maximal 90° definiert ist, ausreichend kurz um das Seitenmesser konstruktiv so zu gestalten, dass es beim Verschwenken des Schneidbalkens in Arbeitsstellung die Funktion einer Gehäuseseitenwand bzw. einer Förderkanalseitenwand übernehmen kann, so dass das entnommene Futter unter Vermeidung von Rieselverlusten im Bereich zwischen Seitenmesser und Förderwalze bzw. -trommel transportiert wird.

In einer vorteilhaften Ausführung ist die Schneidvorrichtung beidseitig mit seitlichen Schneidmessern besetzt, so dass U-förmige Entnahmeschnitte durchgeführt werden können und die Wahl der Entnahmestellen am Flachsilo nicht mehr von einem zuvor durchgeführten Entnahmeschnitt abhängig ist.

Zur Verringerung der am Silostock auftretenden hohen Messerreibung am stirnseitigen, angetriebenen, Schneidmesser wird dieses an der Innenseite des Schneidbalkens angeordnet. Die Hubbewegungen des angetriebenen Schneidmessers sind so eingestellt, dass ein Wechsel der Hubrichtung erst dann erfolgt, wenn ein Ende dieses Schneidmessers die Schnittebene eines seitlichen Schneidmessers wenigstens erreicht hat. Somit ist gewährleistet, dass die vom stirnseitigen Schneidmesser erzeugte Schnittebene seitlich bis an die durch das Seitenmesser erzeugte Schnittebene heranreicht.

In einer vorteilhaften Ausgestaltung der Schneidvorrichtung setzt das Schneidmesser die Hubbewegung nach Durchstoßen der Schnittebene (S) um einen Strecke (HX) fort und kehrt die Hubrichtung erst nach bzw. mit Erreichen eines Endpunktes (E) um.

Hierdurch wird in den Eckbereichen ein Überschnitt realisiert, so dass auch in Fällen, in denen beispielsweise Futter durch die Schnittbewegung seitlich etwas verschoben wird, der durch das stirnseitig angebrachte Schneidmesser erzeugte Schnitt immer zumindest bis an die seitliche Schnittebene heranreicht, bzw. diese um eine Strecke HX durchstößt. Die Strecke HX umfasst vorzugsweise einen Bereich von 1 mm bis 30 mm.

Die Anbringung des Schneidwerks an einer schwenkbaren statt an einer starren Stirnwand des Gehäuses der Entnahmevorrichtung, ermöglicht gegenüber der Anbringung am starren Gehäuseteil, eine verbesserte Aufnahme von sich am Boden vor der Stirnwand des Flachsilos ansammelnden Rieselfutters, da bei hochgeschwenkter Stirnwand die Förderwalze näher zur Aufnahme an den Flachsilo herangeführt werden kann. Ferner wird hierdurch die Aufnahme von haufenförmig am Boden liegender Futtermittel erleichtert.

Besonders von Vorteil ist es, wenn die Schneidspitze des Schneidbalkens unterhalb einer Geraden liegt, die durch den Drehpunkt der Entnahmevorrichtung und den Mittelpunkt der Förderwalze, bzw. Fördertrommel des Schneidwerkes verläuft. Hierdurch wird gewährleistet, dass bei der Entnahme von Futter aus dem Flachsilo zunächst die Schneide mit dem Flachsilo in Eingriff gerät und erst anschließend die bereits abgeschnitten Futterscheibe von der Förderwalze bzw. Fördertrommel erfasst wird, so dass die Anschnittfläche insgesamt glatt ist und Ausfransungen vermieden werden.

Besonders vorteilhaft ist es, wenn die Förderwalze bzw. die Fördertrommel wenigstens eine Schneidklinge umfasst, deren Schneide eine Gegenschneide zur Schneide des Seitenmessers ausbildet, so dass bei rotierenden Förderwalze bzw. Fördertrommel ein scherenartiger Schnitt zwischen der Schneide des Seitenmessers und der Schneidklinge erzeugt wird. Die Förderwalze und die darauf angebrachte Schneidklinge sowie das Seitenmesser des Schneidwerkes sind konstruktiv so aufeinander abgestimmt, dass bei rotierender Förderwalze der Abstand zwischen Schneidklingen-Schneide und Seitenmesser-Schneide gegen Null geht, so dass Schneidklinge und Seitenmesser bei rotierender Schneidwalze eine scherenartige Schnittbewegung vollziehen und dabei das in diesem Bereich befindliche Futter durchtrennen.

In der erfindungsgemässen Ausgestaltung des am Schneidwerk befindlichen Seitenmessers ist eine Schneide vorgesehen, welche vom Schneidenanfangspunkt der konkaven Schneide in Richtung auf den Schneidbalken gerichtet ist und in etwa bis an diesen heranreicht. Die Schneide des Seitenmesser verfügt somit über zwei Bereiche, nämlich, vom Schneidbalken aus gesehen, zunächst über einen linearen Schneidenbereich und im Anschluss daran über den schon genannten konkaven Schneidbereich. Der lineare Schneidbereich ist im Vergleich zum konkaven Schneidbereich relativ kurz und konstruktiv vorzugsweise so gestaltet, dass er eine der Geometrie einer auf der Förderwalze angeordneten Schneidklinge analoge Gegenschneide ausbildet. Hierdurch kann eine an der Außenseite der Förderwalze angeordnete Schneidklinge bei rotierender Förderwalze mit dem linearen Schneidbereich eine linearen, scherenartige, Schnittbewegung vollziehen.

Weiterhin ist es von Vorteil, wenn Verbindungsmittel vorgesehen sind, mit denen die seitlichen Schneidmesser demontierbar am Schneidwerk befestigt sind. Bei den Verbindungsmitteln kann es sich beispielsweise um Schrauben handeln, mit denen das Seitenmesser am Schneidwerk befestigt ist. Verschlissene oder durch Fremdkörper beschädigte Seitenmesser können auf einfache Art ersetzt werden.

Die Erfindung wird nachstehend beispielhaft beschrieben und in den Zeichnungen dargestellt.
- Fig. 1: zeigt das Schneidwerk an einer Entnahmevorrichtung, welche am teilweise dargestellten Schwenkarm eines selbstfahrenden Futtermischwagens angeordnet ist, in Seitenansicht. Das Schneidewerk ist hierbei an einer schwenkbaren Stirnwand angeordnet.
- Fig. 2: zeigt eine Ansicht auf das Schneidwerk (in Pfeilrichtung X).
- Fig. 3: zeigt eine Ansicht nach Fig. 2 mit geteilten Schneidmessern
- Fig. 4: zeigt eine Teilansicht zu Fig. 2
- Fig. 5: zeigt eine Teilansicht zu Fig. 3
- Fig. 6: zeigt eine Schnittansicht zu Fig. 2
- Fig. 7: zeigt ein Ausführungsbeispiel der Anbringung der Entnahmevorrichtung am teilweise dargestellten Schwenkarm eines hinter Zugfahrzeugen fahrbaren Futtermischwagens. Das Schneidwerk ist an der starren Stirnwand des Gehäuses angeordnet.
- Fig. 8: zeigt eine Entnahmevorrichtung mit komplettem Förderkanal
- Fig. 9: zeigt ein Seitenmesser

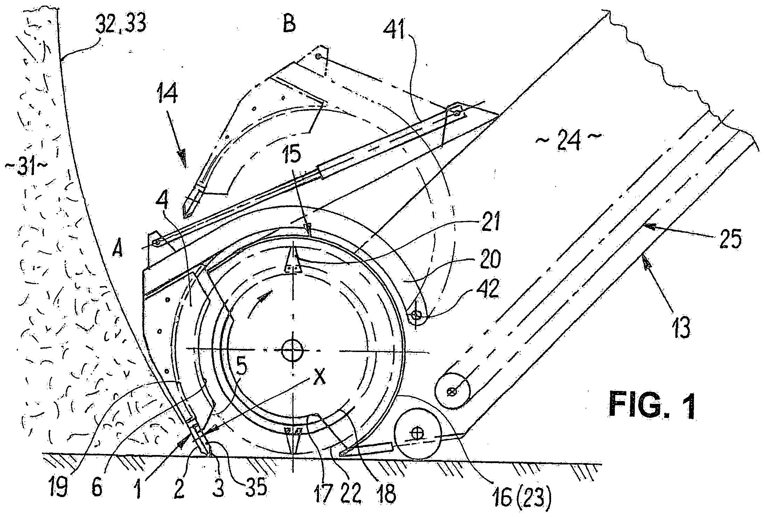

Figur 1 zeigt das Schneidwerk 1, welches an der Entnahmevorrichtung 14 eines nur teilweise dargestellten Schwenkarms 13 eines nicht abgebildeten Futtermischwagens angeordnet ist, wobei das Gehäuse 15 der Entnahmevorrichtung 14 mit der Rückseite seines Gehäusemantels 16 mit dem Schwenkarm 13 verbunden ist. In den Seitenwänden 17 des Gehäuses 15 ist eine Förderwalze 18 gelagert. Die Stirnwand 19 des Gehäuses 15 ist an Hebeln 20 schwenkbar angeordnet, sie trägt das Schneidwerk 1, das stirnseitig mit mindestens einem waagerecht oszillierenden, an einem Schneidbalken 2 anliegenden Schneidmesser 3 ausgestattet ist und an jeder Seite der Stirnwand 15 ein starr angeordnetes Schneidmesser 4 besitzt, welches jeweils an der Unterseite mit einer in Richtung zur Förderwalze 18 schräg ansteigenden Schneide 5 versehen ist, die bis zur konkaven Schnittlinie der Schneide 6 verläuft, welche bei in Arbeitsstellung A befindlicher Stirnwand 19 am Umfangskreis 22 der an der Förderwalze 18 umlaufenden Schneidklingen 21 anliegt oder darin eintaucht. Zur Aufnahme von Rieselgut vor dem Flachsilo 31 oder zum Aufnehmen von als Schüttgut gelagerten Futtermitteln, wird die Stirnwand 19 mittels eines Hubzylinders 41 um die Lager 42 aus der Arbeitsstellung A in eine Stellung B geschwenkt.

Der Schneidbalken 2 ist als starres Schneidmesser ausgebildet und an der Unterseite mit einer verzahnten Schneide 8 ausgestattet, die mit den Schneidezähnen des oszillierenden Schneidemessers 3 zusammenwirkt. Das Schneidemesser 3 wird mittels einer Antriebsvorrichtung 36 in bekannter Weise betätigt und von Druckplatten 37 und Kulissensteinen 38 geführt. Die Hubumschaltung des sich um den Hub H in den Hubrichtungen R1 und R2 hin und her bewegenden Schneidemessers 3 in die entgegengesetzte Hubrichtung erfolgt jeweils dann, wenn ein Messerende 9 die Schnittebene 5 eines der seitlichen Schneidmesser 4 mindestens erreicht bzw. durchstoßen hat.

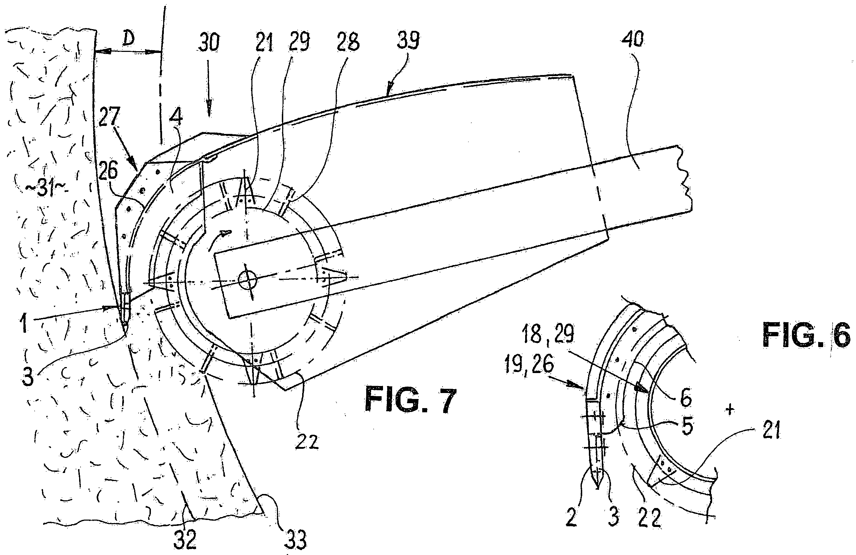

Figur 7 zeigt eine einfachere Entnahmevorrichtung 30, die vorzugsweise an hinter Zugfahrzeugen angehängten und von diesen angetriebenen Futtermischwagen realisiert ist. Das Schneidwerk 1 verfügt im Gegensatz zu dem in Figur 1 dargestellten Schneidwerk nicht über eine verschwenkbare Stirnwand und ist direkt an der starren Stirnwand 26 des Gehäuses 27 angeordnet. An Stelle einer Förderwalze 18 (s. Fig. 1) ist eine Fördertrommel 29 vorgesehen. Eine die volle Entnahmebreite der Fördertrommel 29 voll überdeckende Leitvorrichtung 39 lenkt hierbei das vom Schneidwerk 1 abgetrennte und von der mit Wurfwerkzeugen 28 besetzten Fördertrommel 29 übernommene und weitergeschleuderte Futter, direkt in den Mischraum des Futtermischwagens. Das Gehäuse 27 und die Leitvorrichtung 39 bilden eine ineinander übergehende Einheit, die am Schwenkarm 40 angeordnet ist.

Unabhängig davon, ob es sich um eine Schneidvorrichtung für einen selbstfahrenden Futtermischwagen (Fig. 1) oder um eine Schneidvorrichtung für einen gezogenen Futtermischwagen (Fig. 7) handelt, wird der Futtermischwagen zur Futterentnahme mit der über Hubzylinder 41 hochgeschwenkten Entnahmevorrichtung 14; 30 an die Oberkante des Flachsilos 31 herangefahren, bis der Schneidbalken 2 so weit über dem Silostock steht, dass beim Absenken ein Futterstreifen der Dicke D entlang einer Schnittlinie 32, von der Stirnwand 33 des Flachsilos 31 mittels des oszillierenden Schneidmessers 3 abgetrennt werden kann. Die Entnahme des Futters erfolgt anschließend durch Absenken der Entnahmevorrichtung 1.

Die rotierende Förderwalze 18 bzw. Fördertrommel 29, die mit seitlich angebrachten Schneidklingen 21 ausgerüstet ist, zu denen die konkaven Schneiden 6 der Schneidmesser 4 jeweils eine Gegenschneide bilden, übernimmt das abgetrennte Futter und fördert es strukturschonend weiter. Dieser Weitertransport erfolgt innerhalb des Gehäuses 15; 27 zur Öffnung 23 des im Schwenkarm 13 integrierten Förderschachts, wo das Futter von einem Förderband 25 übernommen wird, bzw. indem, bei einer Schneidvorrichtung mit Fördertrommel 29, das Futter durch eine unmittelbare Wurfbewegung in den Mischraum des Futtermischwagens gefördert wird.

Die Schneidmesser 4 sind derart angeordnet, dass der Raum zwischen Stirnwand 19; 33 und dem Umfangskreis 22 der Schneidklingen (21) weitgehendst abgedeckt wird und die seitlichen Schnittflächen entlang der Schnittebene S eine glatte, saubere Oberfläche bilden.

Die untere, schräg ansteigende Schneide 5 des seitlichen Schneidmessers 4 beginnt nahe der Oberkante 10 des stirnseitigen Schneidmessers 3 oder, um den zwischen Schneidmesser 4 und den Schneidklingen 21 noch zu verbleibenden überdeckungsfreien Raum durch Tieferlegung der Schneide 5 noch weiter zu verringern, nahe der Oberkante 11 einer Ausklinkung 12 am Schneidmesser 35.

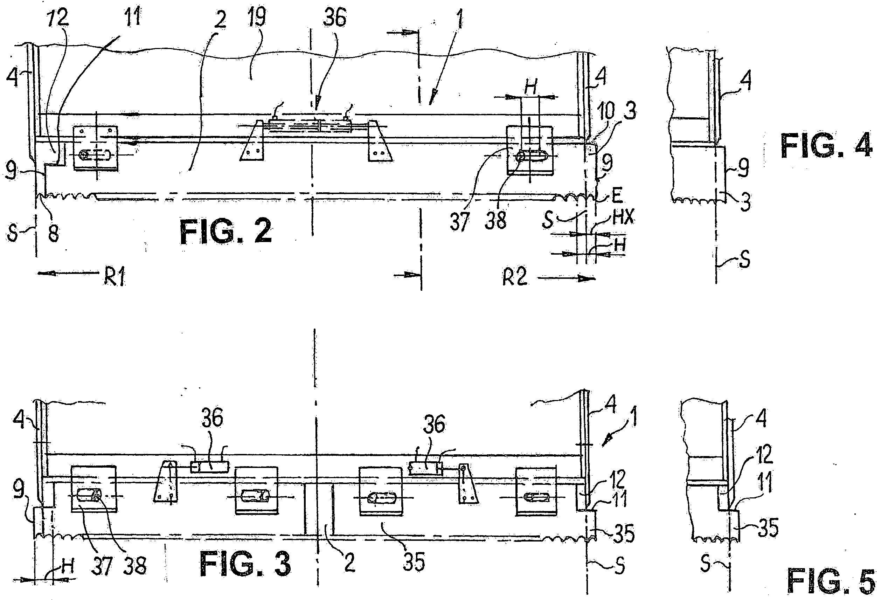

In Fig. 2 ist ein Schneidmesser 3 dargestellt, welches eine Ausführung mit bzw. ohne Ausklinkung 12 zeigt. Durch die Schräglage der Schneide 6 (s. Fig. 1) wird eine verbesserte Schneidwirkung erzielt, vor der Schneide 6 befindliches Futter wird durchgetrennt oder in Richtung zur konkaven Schneide 6, bzw. zu den damit zusammenwirkenden Schneidklingen 21 geführt.

Um in den Ecken der Schnittflächen eine exakte Trennung des Futters zu erhalten und um Ausfransungen und dadurch entstehende raue Schnittflächen zu vermeiden wird die Hubbewegung des Schneidmessers 3 erst umgeschaltet, wenn die Messerenden 9 die Schnittebene S eines seitlichen Schneidmessers 4 mindestens erreicht oder vorzugsweise seitlich durchstoßen und um eine Strecke HX überschnitten haben.

Zur Verbesserung der Laufruhe kann vorgesehen werden, das Schneidmesser 3 in zwei Messerhälften 35 zu unterteilen, die gegenläufige Hubbewegungen zueinander ausführen. Hierdurch wird ein rüttelfreier Lauf erzeugt, da sich die Massenkräfte der Messerhälften gegenseitig aufheben.

Beim Absenken der Entnahmevorrichtung 14; 30 bei einem außen am Schneidbalken 2 befestigten Schneidmessers 3 wird ein erheblicher Druck der Stirnfläche des Flachsilos auf das Schneidmesser 3 ausgeübt, was zu beträchtlicher Reibung führt, welche eine erhöhte Antriebsleistung bedingt. Um diese zu verringern, wird das Schneidmesser 3 vorteilhaft an der Innenseite des Schneidbalkens 2angelegt, da hier kein nennenswerter Reibungsdruck vom Futter ausgeht.

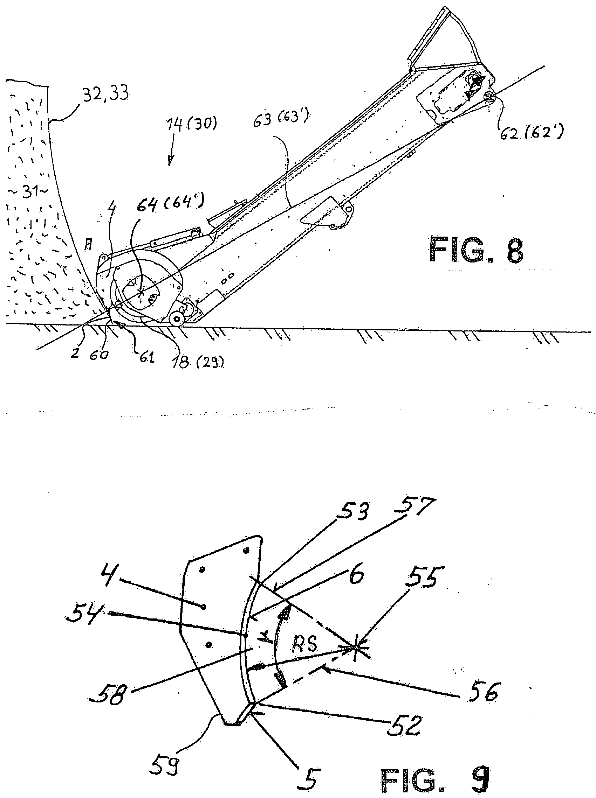

Figur 8 zeigt eine Schneidvorrichtung 14 in einer zur Figur 1 weitgehend ähnlichen Ausführung. Das Schneidwerk ist um einen Drehpunkt 62 gegenüber einem nicht dargestellten Futtermischwagen verschwenkbar. Die Schneidvorrichtung 14 umfasst eine Förderwalze 18 und einen Schneidbalken 2 mit einer Schneide 60. Das Schneidwerk 1 befindet sich in Arbeitsstellung A. Die Schneide 60 wird gebildet durch Schneidzähne mit Schneidspitzen 61, wobei die Ausbildung der Schneide 60 als gerades Element ohne Schneidzähne nicht ausgeschlossen ist. Die Schneidspitzen 61 sind unterhalb einer Geraden 63 angeordnet, die durch die Mittelpunkte 62 und 64 definiert ist.

Die beispielhaft an einer Schneidvorrichtung 14 dargestellte Ausführungsform ist in kinematisch gleicher Weise auch für ein Schneidwerk 30 mit einer Fördertrommel 29 und Mittelpunkten 62' sowie 64' und sich einer hierdurch definierten Geraden 63' ausführbar.

Figur 9 zeigt ein Seitenmesser 4 mit einer Außenkontur, welche eine konkave Schneide 6 umfasst. In diesem Ausführungsbeispiel hat die konkave Schneide 6 die Form eines Kreisbogens 54 und ist so lang, dass der Winkel µ mindestens 45° beträgt. Im Anschluss an die kreisbogenförmige Schneide 6 umfasst die Kontur des Seitenmessers 4 eine sich an die Schneide 6 anschließende Schneide 5, die in etwa bis zur Kante 59 reicht. Der Übergangsbereich von der Schneide 5 zur Schneide 6 kann auch als Radius ausgeführt sein. Die Schneiden 5 und 6 können mit Schneidzähnen oder als glatte Schneiden ohne Schneidzähne ausgeführt sein.

**Bezugszeichenliste:**

| | | | |
|---|---|---|---|
| 1 | Schneidwerk | 36 | Antriebsvorrichtung |
| 2 | Schneidbalken | 37 | Druckplatte |
| 3 | Schneidmesser (stirnseitig) | 38 | Kulissenstein |
| 4 | Schneidmesser (seitlich) | 39 | Leitvorrichtung |
| 5 | Schneide (schräg ansteigend) | 40 | Schwenkarm |
| 6 | Schneide (konkav) | 41 | Hubzylinder |
| 7 | - | 42 | Lager |
| 8 | Schneide (des Schneidbalken) | | |
| 9 | Messerende | | |
| 10 | Oberkante | 50 | - |
| 11 | Oberkante (der Ausklinkung) | 51 | - |
| 12 | Ausklinkung | 52 | Schneidenanfangspunkt |
| 13 | Schwenkarm | 53 | Schneidenendpunkt |
| 14 | Entnahmevorrichtung | 54 | Kreisbogen |
| 15 | Gehäuse | 55 | Kreismittelpunkt |
| 16 | Gehäusemantel | 56 | Begrenzung |
| 17 | Seitenwand | 57 | Begrenzung |
| 18 | Förderwalze | 58 | Kreissektor |
| 19 | Stirnwand | 59 | Kante |
| 20 | Hebel | 60 | Schneide |
| 21 | Schneidklingen | 61 | Schneidspitze |
| 22 | Umfangskreis | 62;62' | Mittelpunkt |
| 23 | Öffnung | 63 | Gerade |
| 24 | Förderschacht | 64;64' | Mittelpunkt |
| 25 | Förderband | 65 | |
| 26 | Stirnwand (starres Gehäuse) | | |
| 27 | Gehäuse (starr) | A | Arbeitsstellung |
| 28 | Wurfwerkzeug | B | Stellung |
| 29 | Fördertrommel | D | Dicke |
| 30 | Entnahmevorrichtung | S | Schnittebene |
| 31 | Flachsilo | X | Pfeilrichtung |
| 32 | Schnittlinie | H | Hub |
| 33 | Stirnwand | HX | Strecke |
| 34 | - | R1, R2 | Richtung |
| 35 | Messerhälfte | E | Endpunkt |
| | | µ | Winkel |

## Patentansprüche

1. Schneidwerk (1), umfassend einen Schneidbalken (2) und ein bewegliches Schneidmesser (3) mit Messerenden (9), wobei das Schneidwerk (1) an einer am Schwenkarm (13) eines Futtermischwagens vorgesehenen Entnahmevorrichtung (30; 14) angeordnet und für die Entnahme von in einem Flachsilo (31) gelagertem Futter geeignet ist und wobei das Futter vom Schneidwerk (1)
- bei einem selbstfahrenden Futtermischwagen, vorzugsweise von einer nachgeschalteten Förderwalze (18) innerhalb eines Gehäuses (15) zu einem im Schwenkarm (13) integrierten Förderband (25) zur Weiterleitung in einen Mischraum geführt wird oder
- bei einem hinter einem Zugfahrzeug angehängten Futtermischwagen von einer mit Wurfwerkzeugen (28) besetzten Fördertrommel (29) entlang einer Leitvorrichtung (39) direkt in den Mischraum geschleudert wird, und wobei
- das Schneidwerk (1) eine Stirnwand (19) umfasst, an welche wenigstens ein seitliches Schneidmesser (4) angebracht ist;
- das stirnseitige Schneidmesser (3) und die seitlichen Schneidmesser (4) an der Stirnwand (19) angeordnet sind;
- das seitliche Schneidmesser (4) eine sich von einem Schneidenanfangspunkt (52) zu einem Schneidenendpunkt (53) erstreckenden Schneide (6) umfasst, wobei
- die Schneide (6) die Kontur eines vom Schneidenanfangspunkt (52) zum Schneidenendpunkt (53) sich erstreckenden Kreisbogens (54) mit einem Kreismittelpunkt (55) und einem Radius (RS) aufweist;
- der Kreisbogen (54) mit einer sich vom Schneidenanfangspunkt (52) zum Kreismittelpunkt (55) erstreckenden Begrenzung (56) sowie einer vom Schneidenendpunkt (53) zum Kreismittelpunkt (55) weiteren Begrenzung (57) einen Kreissektor (58) definiert, wobei der Kreissektors (58) zwischen den Begrenzungen (56; 57) einen Winkel (µ) umfasst, der wenigstens 45° beträgt,
**dadurch gekennzeichnet, dass** am Schneidmesser (4) eine Schneide (5) vorgesehen ist, welche vom Schneidenanfangspunkt (52) der Schneide (6) in Richtung einer Kante (59) gerichtet ist und in etwa bis an die Kante (59) heranreicht.

2. Schneidwerk (1) nach Anspruch 1, **dadurch gekennzeichnet, dass** die Förderwalze (18) bzw. die Fördertrommel (29) wenigstens eine Schneidklinge (21) umfasst, deren Schneide eine Gegenschneide zur Schneide (5) und/oder zur Schneide (6) ausbildet, so dass bei rotierenden Förderwalze (18) bzw. Fördertrommel (29) ein scherenartiger Schnitt zwischen der Schneide (5; 6) und der Schneide der Schneidklinge (21) erzeugt wird.

3. Schneidwerk (1) nach einem der vorhergehenden Ansprüche, **dadurch gekennzeichnet, dass** Verbindungsmittel vorgesehen sind, mit denen die seitlichen Schneidmesser (4) demontierbar am Schneidwerk (1) befestigt sind.

## Claims

1. Cutting device (1), comprising a cutting bar (2) and a moveable cutting knife (3) with knife ends (9), wherein the cutting device (1) is arranged on a removal apparatus (30; 14), which is provided on the pivoting arm (13) of a feed-mixing wagon, and is suitable for the removal of feed stored in a flat silo (31), and wherein, by the cutting device (1)
- in the case of a self-propelled feed-mixing wagon, the feed is guided preferably by a downstream conveyor roller (18) within a housing (15) to a conveyor belt (25), which is integrated in the pivoting arm (13), for forwarding the feed into a mixing space, or
- in the case of a feed-mixing wagon attached behind a tractor, the feed is thrown by a conveyor drum (29), which is fitted with throwing tools (28), along a directing apparatus (39) directly into the mixing space,
and wherein
- the cutting device (1) comprises an end wall (19) to which at least one lateral cutting knife (4) is attached;
- the end-side cutting knife (3) and the lateral cutting knives (4) are arranged on the end wall (19);
- the lateral cutting knife (4) comprises a cutting edge (6) which extends from a cutting-edge starting point (52) to a cutting-edge end point (53), wherein
- the cutting edge (6) has the contour of a circular arc (54) which extends from the cutting-edge starting point (52) to the cutting-edge end point (53) and has a circle centre point (55) and a radius (RS);
- the circular arc (54) together with a boundary (56), which extends from the cutting-edge starting point (52) to the circle centre point (55), and together with a further boundary (57) from the cutting-edge end point (53) to the circle centre point (55), defines a circular sector (58), wherein the circular sector (58) between the boundaries (56; 57) comprises an angle (µ) which is at least 45°,
**characterized in that** a cutting edge (5) is provided on the cutting knife (4), said cutting edge being directed from the cutting-edge starting point (52) of the cutting edge (6) in the direction of an edge (59) and extending approximately as far as the edge (59).

2. Cutting device (1) according to Claim 1, **characterized in that** the conveyor roller (18) or the conveyor drum (29) comprises at least one cutting blade (21), the cutting edge of which forms a counter cutting edge to the cutting edge (5) and/or to the cutting edge (6), and therefore, when the conveyor roller (18) or conveyor drum (29) rotates, a scissor-like cut is produced between the cutting edge (5; 6) and the cutting edge of the cutting blade (21).

3. Cutting device (1) according to either of the preceding claims, **characterized in that** connecting means are provided with which the lateral cutting knives (4) are fastened removably to the cutting device (1).

## Revendications

1. Système de coupe (1), comprenant une barre tranchante (2) et un couteau tranchant (3) mobile avec des extrémités de couteau (9), le système de coupe (1) étant disposé au niveau d'un dispositif de prélèvement (30 ; 14) prévu au niveau du bras mobile (13) d'un chariot de mélange de fourrage et étant adapté pour le prélèvement de fourrage entreposé dans un silo plat (31) et le fourrage provenant du système de coupe (1)
- étant guidé, en cas de chariot de mélange de fourrage conduit automatiquement, de préférence par un rouleau de transport (18) connecté en aval, à l'intérieur d'un carter (15) en direction d'un tapis de transport (25) intégré dans le bras mobile (13), pour le transfert dans une chambre de mélange ; ou
- étant projeté directement dans la chambre de mélange, en cas de chariot de mélange de fourrage accroché derrière un véhicule tracteur, par un tambour de transport (29) pourvu d'outils d'éjection (28), le long d'un dispositif de guidage (39) ;
et
- le système de coupe (1) comprenant une paroi avant (19) au niveau de laquelle au moins un couteau tranchant (4) latéral est placé ;
- le couteau tranchant (3) du côté avant et le couteau tranchant (4) latéral étant disposés au niveau de la paroi avant (19) ;
- le couteau tranchant (4) latéral comprenant un tranchant (6) s'étendant d'un point de début de tranchant (52) à un point de fin de tranchant (53) ;
- le tranchant (6) comportant le contour d'un arc de cercle (54) s'étendant du point de début de tranchant (52) au point de fin de tranchant (53) avec un point central de cercle (55) et un rayon (RS) ;
- l'arc de cercle (54) définissant avec une délimitation (56) s'étendant du point de début de tranchant (52) au point central de cercle (55) ainsi qu'avec une délimitation (57) supplémentaire allant du point de fin de tranchant (53) au point central de cercle (55) un secteur de cercle (58), le secteur de cercle (58) comprenant entre les délimitations (56 ; 57) un angle (µ) d'au moins 45° ;
**caractérisé en ce qu'**un tranchant (5) est prévu au niveau du couteau tranchant (4), ledit tranchant étant orienté du point de début de tranchant (52) du tranchant (6) en direction d'une arête (59) et atteignant presque l'arête (59).

2. Système de coupe (1) selon la revendication 1, **caractérisé en ce que** le rouleau de transport (18) et/ou le tambour de transport (29) comprend au moins une lame tranchante (21) dont le tranchant forme un contre-tranchant par rapport au tranchant (5) et/ou au tranchant (6), de sorte qu'en cas de rouleau de transport (18) et/ou de tambour de transport (29) tournants, une coupe de type cisaillement se produit entre le tranchant (5 ; 6) et le tranchant de la lame tranchante (21).

3. Système de coupe (1) selon l'une quelconque des revendications précédentes, **caractérisé en ce que** des moyens de liaison sont prévus à l'aide desquels les couteaux tranchants (4) latéraux sont fixés de façon démontable au système de coupe (1).
